# EUROPÄISCHE PATENTSCHRIFT

(11) **EP 0 609 851 B1**
(45) Veröffentlichungstag und Bekanntmachung des Hinweises auf die Patenterteilung: **02.01.1997**
(21) Anmeldenummer: 94101501.8
(22) Anmeldetag: 02.02.1994
(51) Int. Cl.: C06D 5/08, C06B 47/00

(54) **Gasentwickelndes Material**
Gas generator using liquified gas
Générateur de gaz à base de gaz liquéfié

(30) Priorität: 04.02.1993 DE 4303169
(43) Veröffentlichungstag der Anmeldung: 10.08.1994
(73) Patentinhaber: Dynamit Nobel GmbH Explosivstoff- und Systemtechnik, 53840 Troisdorf (DE)
(72) Erfinder: Brede, Uwe, D-90765 Fürth (DE); Hagel, Rainer, Dr., D-91058 Erlangen (DE); Redecker, Klaus, Dr., D-90431 Nürnberg (DE)

(56) Entgegenhaltungen:
- EP-A- 0 540 013
- US-A- 3 273 348
- B. KIT ET AL. 'Rocket Propellant Handbook' 1960 , THE MACMILLAN COMPANY , NEW YORK, USA * Seite 164 - Seite 167 * * Seite 344 - Seite 346 *

## Beschreibung

Die Erfindung betrifft ein gasentwickelndes Material für einen Gasgenerator, insbesondere für einen Gurtstraffer oder für ein aufblasbares Aufprallkissen zum Schutz eines Kraftfahrzeug-Insassen vor Verletzungen, das aus einem Flüssiggasgemisch besteht.

Bei den derzeit verwendeten Gasgeneratoren für aufblasbare Aufprallkissen (auch "Airbag" genannt) wird als brennbares gasentwickelndes Material ein Treibladungssatz in Tabletten- oder Scheibenform verwendet (vgl. EPA 0 012 628). In der DE-OS 22 40 253 wird eine pyrotechnische Zusammensetzung zum Aufblasen passiver Sicherheitsrückhalteeinrichtungen beschrieben, die extrudiert werden kann. Beim Abbrand erzeugen diese Gassätze das Nutz- oder Druckgas zum Aufblasen des Aufprallkissens. Der Nachteil bei der Verbrennung fester gasentwickelnder Materialien besteht im allgemeinen in dem recht hohen bei der Verbrennung entstehenden Schlakkenanteil, der mehr als 50% der eingesetzten Gassatzmasse ausmacht. Aufgrund der Schlacke- und Staubbildung bei der Verbrennung sind aufwendige Filterstufen im Gasgenerator erforderlich, um Schlacke- und Staubpartikel zurückzuhalten. Andernfalls würde beim Austritt dieser Partikel das Aufprallkissen beschädigt und die Insassen in Gefahr gebracht werden können.

Als Alternative zu Feststoffen enthaltenden existieren Generatoren mit komprimierten Gasen oder Luft (vgl. US-PS 3 810 653). Zur Bildung eines ausreichenden Gasvolumens sind sehr hohe Ladedrücke erforderlich, da beim Abströmen der Gase eine Abkühlung stattfindet und kein Volumengewinn durch exotherme Reaktionen wie bei Feststoffmischungen erzielt wird.

Die nach dem Prioritätstag der vorliegenden Anmeldung publizierte EP-A-0 540 013 offenbart gasentwickelnde Materialien für einen Gasgenerator, die aus einem oder mehreren kurzkettigen Kohlenwasserstoffen und Distickstoffmonoxid bestehen. Als kurzkettige Kohlenwasserstoffe werden Propan, n-Butan und i-Butan genannt.

Der Erfindung liegt die Aufgabe zugrunde, ein gasentwickelndes Material für einen Gasgenerator, insbesondere für einen Gurtstraffer oder für ein aufblasbares Aufprallkissen zum Schutz eines Kraftfahrzeug-Insassen vor Verletzungen bereitzustellen, bei dem Schlackerückhalteeinrichtungen nicht erforderlich sind sowie die Verwendung des gasentwickelnden Materials zur Erzeugung von Nutz- oder Druckgas. Als gasentwickelndes Material soll Flüssiggas eingesetzt werden, das bei Zündung kontrolliert in den Verbrennungsraum hineingelangt und in diesem verbrennt.

Die Lösung der vorgenannten Aufgabe besteht in einem Flüssiggasgemisch als gasentwickelndes Material aus einem oder mehreren Brennstoffen und einem Oxidationsmittel, wobei es sich bei dem Flüssiggas um ein Material handelt, das unter Normalbedingungen (Zimmertemperatur und Normaldruck) im gasförmigen Aggregatzustand vorliegt und aufgrund des Drukkes, unter dem es im Vorratsraum steht, verflüssigt ist. Dieses unter Druck stehende Flüssiggas wird kontrolliert in den zum Vorratsraum benachbarten Verbrennungsraum des Gasgenerators eingespritzt. Kurz vor bzw. mit dem Einlaß des Flüssiggasgemisches in den Verbrennungsraum wird eine Anzündvorrichtung mit einer Anzündladung gezündet. Als Anzündladung kann beispielsweise ein explodierender Draht oder eine partikelreiche, heiße Flamme verwendet werden. Die Anzündschwaden und heißen Verbrennungsgase entzünden das Flüssiggasgemisch, das aufgrund der auftretenden Expansion im Verbrennungsraum verdampft bzw. sich verflüchtigt. Das brennbare Flüssiggasgemisch verbrennt im Verbrennungsraum, ohne daß feste Partikel zurückbleiben. Auf Filterstufen, die der mindestens einen Austrittsöffnung der Gasgenerator-Gehäusewand vorgelagert sind, kann bei Verwendung des erfindungsgemäßen Flüssiggasgemisches daher verzichtet werden. Sofern Filterstufen vorgesehen sind, dienen diese ausschließlich Kühlzwecken. Die Kühlung kann aber auch auf andere Weise erfolgen, indem etwa dem Verbrennungsraum ein Verteilerraum des Gehäuses nachgeschaltet ist, von dem aus die Verbrennungsgase über die mindestens eine Austrittsöffnung nach außen gelangen.

Erfindungsgemäß werden Gasgemische mit niedrigem Ladedruck vorgeschlagen, die beim Abbrand infolge Exothermie eine Volumenvervielfachung ergeben und keinerlei Filter benötigen. Das erfindungsgemäß einsetzbare Flüssiggasgemisch besteht aus einem Brennstoffanteil und dem Oxidationsmittel. Zur Vermeidung von hohen Ladedrücken wird auf Sauerstoff oder Luft als Oxidationsmittel verzichtet. In Distickstoffmonoxid (Lachgas) liegt ein Gas vor, das sich leicht verflüssigen läßt (kritischer Druck: 72,7 bar, kritische Temperatur: 36,4°C). Die Oxidationskapazität ist doppelt so hoch wie die von Luft und im Gegensatz zu reinem Sauerstoff oder Luft verhält sich Lachgas bis mindestens 200°C als Inertgas, wodurch stille Oxidationsprozesse auch bei Hochtemperaturlagerung verhindert werden.

Der Brennstoffanteil besteht aus einem oder mehreren Ethern oder Olefinen, aus Ammoniak oder Wasserstoff oder aus Mischungen dieser Bestandteile.

Vorzugsweise werden im Sinne der vorliegenden Erfindung Ether eingesetzt, die ausgewählt sind aus Dimethylether und Ethylmethylether sowie deren Gemische. Ein besonders bevorzugter Ether im Sinne der vorliegenden Erfindung ist Dimethylether.

Als Olefine werden im Sinne der vorliegenden Erfindung niedrig siedende Olefine, wie beispielsweise Ethen und Propen sowie deren Gemische eingesetzt. Besonders bevorzugt als Olefin ist Ethen.

Die Zündfähigkeit der erfindungsgemäßen Gemische ist in einem weiten Bereich gegeben. Beispielsweise sind Gemische von 97,5 Gew.-% Distickstoffmonoxid und 2,5 Gew.-% Brennstoffanteil bis 70 Gew.-% Distickstoffmonoxid und 30 Gew.-% Brennstoffanteil außerordentlich gut zündfähig. Beim Einsatz von beispielsweise Ammoniak als Brennstoff kann der Anteil von Ammoniak 14 bis 75 Gew.-Teile und der Anteil von Distickstoffmonoxid 25 bis 86 Gew.-Teile betragen. Die thermische Stabilität der erfindungsgemäßen Gemische erfüllt alle Anforderungen, die im Automobilbereich gestellt werden. Die Lagerstabilität der erfindungsgemäßen Treibmittel wurde mit > 105°C bestimmt.

Das Gewichtsverhältnis der Brennstoffe zu Distickstoffmonoxid wird vorzugsweise derart eingestellt, daß nach der Reaktion ein nicht brennbares Gasgemisch entsteht. Dementsprechend sollte das Gewichtsverhältnis der Brennstoffe zu Distickstoffmonoxid den stöchiometrischen Verhältnissen einer (möglichst) vollständigen Verbrennung angepaßt sein. Vorteilhafterweise wird daher Distickstoffmonoxid in einem geringen Überschuß, bezogen auf den Brennstoff, eingesetzt. Die Reaktionsprodukte bestehen dann im wesentlichen aus gasförmigen Stoffen (CO₂, H₂O und N₂ neben gegebenenfalls vorhandenen Restbestandteilen der Komponenten). Ein besonderer Vorteil beim Einsatz von Ammoniak oder Wasserstoff als Brennstoff besteht darin, daß als Reaktionsprodukte ausschließlich N₂ und H₂O gebildet werden. Ein besonders geeignetes Mischungsverhältnis für die Komponenten Dimethylether und Distickstoffmonoxid besteht in einem Gewichtswichtsverhältnis von Dimethylether zu Distickstoffmonoxid von 12 : 88 Gew.-Teilen, für die Komponenten Ethen und Distickstoffmonoxid in einem Gewichtsverhältnis von Ethen zu Distickstoffmonoxid von 10 : 90 Gew.-Teilen, für die Komponenten Ammoniak und Distickstoffmonoxid in einem Gewichtsverhältnis von Ammoniak zu Distickstoffmonoxid von 15 : 85 Gew.-Teilen, für die Komponenten Wasserstoff und Distickstoffmonoxid in einem Gewichtsverhältnis von Wasserstoff zu Distickstoffmonoxid von 4,3 : 95,7 Gew.-Teilen. Distickstoffmonoxid fungiert hier als Sauerstoffgeber.

Die Umsetzungsgeschwindigkeit, insbesondere bei höheren Lademassen in Flüssiggasgeneratoren läßt sich überraschenderweise in weiten Grenzen durch Zusatz von Inertgasen, insbesondere physiologisch unbedenklichen Gasen mit geringem Eigendruck, steuern. Besonders bevorzugt ist daher ein Inertgas ausgewählt aus Kohlendioxid oder Xenon oder deren Mischungen. Die genannten Inertgase können vorzugsweise in einer Menge von 10 bis 80 Gew.-%, bezogen auf das Gemisch aus Brennstoffanteil und Distickstoffmonoxid, eingesetzt werden. Kohlendioxid läßt sich bekanntermaßen ebenso leicht wie Distickstoffmonoxid kondensieren (kritischer Druck: 73,8 bar, kritische Temperatur: 31,0°C). Das Inertgas, insbesondere das Kohlendioxid wirkt im Sinne der vorliegenden Erfindung als Reaktionsmoderator. Kohlendioxid hat dabei wesentlich günstigere Eigenschaften als beispielsweise Stickstoff und andere Inertgase, deren Anwendung jedoch nicht ausgeschlossen werden soll. Xenon als Inertgas bietet insbesondere bei Verwendung der Brennstoffe Ammoniak oder Wasserstoff den Vorteil, daß als Reaktionsprodukte lediglich N₂ und H₂O entstehen.

Erfindungsgemäß ist die Mischung aus 14 bis 87,75 Gew.-% Distickstoffmonoxid, 0,5 bis 27 Gew.-% Brennstoffanteil und gegebenenfalls 10 bis 80 Gew.-% Inertgas zusammengesetzt. Im einzelnen können beispielsweise folgende Zusammensetzungen erfindungsgemäß eingesetzt werden:

| **Zusammensetzung I:** | |
|---|---|
| Distickstoffmonoxid | 90 Gew.-% |
| Brennstoff | 10 Gew.-% |

| **Zusammensetzung II:** | |
|---|---|
| Distickstoffmonoxid | 85 Gew.-% |
| Brennstoff | 15 Gew.-% |

| **Zusammensetzung III:** | |
|---|---|
| Distickstoffmonoxid | 70 Gew.-% |
| Brennstoff | 30 Gew.-% |

| **Zusammensetzung IV:** | |
|---|---|
| Distickstoffmonoxid | 97,5 Gew.-% |
| Brennstoff | 2,5 Gew.-% |

| **Zusammensetzung V:** | |
|---|---|
| Distickstoffmonoxid | 14 Gew.-% |
| Brennstoff | 6 Gew.-% |
| Inertgas | 80 Gew.-% |

| **Zusammensetzung VI:** | |
|---|---|
| Distickstoffmonoxid | 59,4 Gew.-% |
| Brennstoff | 6,6 Gew.-% |
| Inertgas | 34 Gew.-% |

| **Zusammensetzung VII:** | |
|---|---|
| Distickstoffmonoxid | 19,5 Gew.-% |
| Brennstoff | 0,5 Gew.-% |
| Inertgas | 80 Gew.-% |

| **Zusammensetzung VIII:** | |
|---|---|
| Distickstoffmonoxid | 87,75 Gew.-% |
| Brennstoff | 2,25 Gew.-% |
| Inertgas | 10 Gew.-% |

| **Zusammensetzung IX:** | |
|---|---|
| Distickstoffmonoxid | 63 Gew.-% |
| Brennstoff | 27 Gew.-% |
| Inertgas | 10 Gew.-%. |

| **Zusammensetzung X:** | |
|---|---|
| Distickstoffmonoxid | 44 Gew.-% |
| Brennstoff | 6 Gew.-% |
| Inertgas | 50 Gew.-% |

| **Zusammensetzung XI:** | |
|---|---|
| Distickstoffmonoxid | 45 Gew.-% |
| Brennstoff | 5 Gew.-% |
| Inertgas | 50 Gew.-% |

| **Zusammensetzung XII:** | |
|---|---|
| Distickstoffmonoxid | 28,7 Gew.-% |
| Brennstoff | 1,3 Gew.-% |
| Inertgas | 70,0 Gew.-%. |

Diese Angaben sollen die Erfindung näher erläutern, ohne sie jedoch einzuschränken.

Die Explosionstemperatur der erfindungsgemäßen Gemische beträgt etwa 3000°C und sinkt mit steigendem Anteil an Inertgas. Somit tritt bei der Umsetzung eine Volumenpotenzierung ein. Die Anpassung der Kinetik an das jeweilige System, beispielsweise an das jeweilige Airbag-System, kann durch Variation der Menge, insbesondere des Reaktionsmoderators eingestellt werden.

Für den Fall, daß es bei speziellen Anwendungen erforderlich sein sollte, vom stöchiometrischen Verhältnis abzuweichen, kann zur Reduzierung der Gasanteile eine katalytische Nachreaktion, beispielsweise mittels eines Katalysators aus einem geeigneten Stoff in Form eines Durchströmungssiebes, angebracht sein.

Zur Steuerung der Emissionscharakteristik (CO-NOₓ-Gleichgewicht) können die reagierenden Gas in der Brennkammer oder einem Diffusor in Kontakt mit dünnen, beispielsweise galvanisch erzeugten Schichten von Metallen oder Legierungen der Platinreihe gebracht werden.

Die nachfolgend beschriebenen Versuche belegen die Einsetzbarkeit der erfindungsgemäßen Gemische. Die Treibmittel werden in einer Prüfvorrichtung, die vom Aufbau her einem Gasgenerator nachempfunden ist, mit nachgeschalteter Kanne mit einem für Treibmittel für Gasgeneratoren üblichen Anzündsatz überprüft.

### Beispiel 1:

In einer handelsüblichen Distickstoffmonoxid-Patrone mit 10 ml Inhalt, beispielsweise für Sahnebereiter geeignet, werden nach dem Ablassen des Distickstoffmonoxids 2,5 g einer Mischung aus 90 Gew.-% Distickstoffmonoxid und 10 Gew.-% Dimethylether einkondensiert. Dieses Gemisch wurde durch eine Anzündladung, beispielsweise durch einen explodierenden Draht entzündet. Bedingt durch die hohe Explosionstemperatur tritt eine Volumenpotenzierung auf. Das sich entwickelnde Gas ist beispielsweise zur Füllung eines Airbag geeignet.

### Beispiel 2:

Dieses Beispiel soll die Stabilität der erfindungsgemäßen Mischungen demonstrieren. Eine handelsübliche Sprengkapsel Nr. 8, die an der gemäß Beispiel 1 gefüllten Patrone angebracht wurde, perforierte die Patronenwand und zündete das Gemisch, wobei die Patrone in kleine Stücke zerlegt wurde. Eine Füllung aus Distickstoffmonoxid allein zerlegte beim Ansprengen die Patrone nicht. Legte man eine Lage handelsüblichen Isolierbands um die Patrone und setzte dann die Sprengkapsel auf, so wurde die Patronenwand nur stark eingedrückt, jedoch nicht perforiert und das Gasgemisch zündete nicht. Es überstand somit sogar den Detonationsstoß einer Sprengkapsel.

### Beispiel 3:

Ein Gemisch aus 50 Gew.-% Kohlendioxid, 44 Gew.-% Distickstoffmonoxid und 6 Gew.-% Dimethylether erfüllt beim Abbrand den für Airbag-Generatoren geforderten Druck-Zeit-Verlauf.

### Beispiel 4:

Ein Gemisch aus 50 Gew.-% Kohlendioxid, 45 Gew.-% Distickstoffmonoxid und 5 Gew.-% Ethen erfüllt beim Abbrand den für Airbag-Generatoren geforderten Druck-Zeit-Verlauf.

### Beispiel 5:

Eine Mischung aus 70 Gew.-% Kohlendioxid oder Xenon, 28,7 Gew.-% Distickstoffmonoxid und 1,3 Gew.-% Wasserstoff zeigt bei einer Ladedichte von 0,3 g/ml einen Druck von ca. 50 bar bei Raumtemperatur. Das Abbrandverhalten entspricht dem der organisch-anorganischen Rezepturen. Die Mischung erfüllt beim Abbrand den für Airbag-Generatoren geforderten Druck-Zeit-Verlauf. Bei der Verwendung von Xenon als Inertgas entstanden als Reaktionsprodukte lediglich N₂ und H₂0.

## Patentansprüche

1. Gasentwickelndes Material für einen Gasgenerator,
**dadurch gekennzeichnet,** daß es aus einer Flüssiggasmischung aus einem oder mehreren gasförmigen Brennstoffen, ausgewählt aus Ethern, Olefinen, Ammoniak und/oder Wasserstoff und Distickstoffmonoxid besteht.

2. Gasentwickelndes Material nach Anspruch 1, dadurch gekennzeichnet, daß die Brennstoffe ausgewählt sind aus Dimethylether, Ethylmethylether und deren Gemischen, aus niedrig siedenden Olefinen wie Ethen, Propen und deren Gemischen, aus Ammoniak oder Wasserstoff.

3. Gasentwickelndes Material nach einem der Ansprüche 1 bis 2, dadurch gekennzeichnet, daß das Gewichtsverhältnis von Brennstoff zu Distickstoffmonoxid im Bereich 70 bis 97,5 Gew.-% Distickstoffmonoxid, bezogen auf das Gemisch aus Brennstoff und Distickstoffmonoxid eingestellt ist.

4. Gasentwickelndes Material nach einem oder mehreren der Ansprüche 1 bis 3, dadurch gekennzeichnet, daß das Gewichtsverhältnis von Brennstoff zu Distickstoffmonoxid den stöchiometrischen Verhältnissen einer vollständigen Verbrennung des Brennstoffs angepaßt ist.

5. Gasentwickelndes Material nach einem oder mehreren der Ansprüche 1 bis 4, dadurch gekennzeichnet, daß das Gewichtsverhältnis von Dimethylether zu Distickstoffmonoxid 12 : 88 Gew.-Teile, von Ethen zu Distickstoffmonoxid 10 : 90 Gew.-Teile, von Ammoniak zu Distickstoffmonoxid 15 : 85 Gew.-Teile und von Wasserstoff zu Distickstoffmonoxid 4,3 : 95,7 Gew.-Teile beträgt.

6. Gasentwickelndes Material nach einem oder mehreren der Ansprüche 1 bis 5, dadurch gekennzeichnet, daß das Flüssiggasgemisch neben dem oder den Brennstoffen und dem Distickstoffmonoxid weiterhin ein Inertgas, insbesondere ein Inertgas mit geringem Eigendruck enthält.

7. Gasentwickelndes Material nach Anspruch 6, dadurch gekennzeichnet, daß das Inertgas Kohlendioxid und/oder Xenon, insbesondere in einer Menge von 10 bis 80 Gew.-%, bezogen auf das Gemisch aus Brennstoff und Distickstoffmonoxid, ist.

8. Verwendung des gasentwickelnden Materials gemäß einem oder mehreren der Ansprüche 1 bis 7 in einem Gasgenerator zur Erzeugung von Nutz- oder Druckgas durch Zündung eines Anzündsatzes.

9. Verwendung des gasentwickelnden Materials gemäß Anspruch 8, dadurch gekennzeichnet, daß die reagierenden Gase in Kontakt mit dünnen, insbesondere galvanisch erzeugten Schichten von Metallen oder Legierungen der Platinreihe gebracht werden.

## Claims

1. Gas-producing material for a gas generator,
characterized in that it consists of a liquefied gas mixture of one or more gaseous fuels, selected from ethers, olefins, ammonia and/or hydrogen, and nitrous oxide.

2. Gas-producing material according to Claim 1,
characterized in that the fuels are selected from dimethyl ether, ethylmethyl ether and mixtures thereof, from low-boiling olefins such as ethylene, propylene and their mixtures, from ammonia or hydrogen.

3. Gas-producing material according to one of Claims 1 to 2,
characterized in that the weight ratio of fuel to nitrous oxide is set to be in the range 70 to 97.5% by weight of nitrous oxide, related to the mixture of fuel and nitrous oxide.

4. Gas-producing material according to one or several of Claims 1 to 3, characterized in that the weight ratio of fuel to nitrous oxide is adapted to the stoichiometric conditions for a complete combustion of the fuel.

5. Gas-producing material according to one or more of Claims 1 to 4, characterized in that the weight ratio of dimethyl ether to nitrous oxide is 12 : 88 parts by weight, of ethylene to nitrous oxide 10 : 90 parts by weight, of ammonia to nitrous oxide 15 : 85 parts by weight and of hydrogen to nitrous oxide 4.3 : 95.7 parts by weight.

6. Gas-producing material according to one or more of Claims 1 to 5, characterized in that the liquefied gas mixture also contains in addition to the fuel or fuels and the nitrous oxide an inert gas, particularly an inert gas with a low intrinsic pressure.

7. Gas-producing material according to Claim 6,
characterized in that the inert gas is carbon dioxide and/or xenon, particularly in a quantity from 10 to 80% by weight, related to the mixture of fuel and nitrous oxide.

8. Use of gas generating material according to one or several of claims 1 to 7 in a gas generator for production of effective or pressure gas by ignition of an ignition charge.

9. Use of the gas generating material according to claim 8, characterised in that the reacting gases are brought into contact with thin, in particular electrolytically produced layers of metals of alloys of the platinum series.

## Revendications

1. Substance produisant un gaz pour un générateur de gaz, caractérisée en ce qu'elle est constituée d'un mélange de gaz liquéfié contenant un ou plusieurs combustibles gazeux, choisis parmi les éthers, les oléfines, l'ammoniac et/ou l'hydrogène et le protoxyde d'azote.

2. Substance produisant un gaz conforme à la revendication 1, caractérisée en ce que les combustibles sont choisis parmi l'éther diméthylique, l'éthylméthyléther et des mélanges de ceux-ci, parmi les oléfines volatiles comme l'éthène, le propène et des mélanges de ceux-ci, parmi l'ammoniac ou l'hydrogène.

3. Substance produisant un gaz conforme à l'une des revendications 1 à 2, caractérisée en ce que le rapport en poids du combustible au protoxyde d'azote est ajusté de manière à ce que le protoxyde d'azote soit présent à raison de 70 à 97,5 % en poids rapporté au mélange de combustible et de protoxyde d'azote.

4. Substance produisant un gaz conforme à une ou plusieurs des revendications 1 à 3, caractérisée en ce que le rapport en poids du combustible au protoxyde d'azote est adapté au rapport stoechiométrique d'une combustion totale du combustible.

5. Substance produisant un gaz conforme à une ou plusieurs des revendications 1 à 4, caractérisée en ce que le rapport en poids d'éther diméthytique au protoxyde d'azote vaut 12/88, le rapport en poids d'éthène au protoxyde d'azote vaut 10/90, le rapport en poids d'ammoniac au protoxyde d'azote vaut 15/85 et le rapport en poids d'hydrogène au protoxyde d'azote vaut 4,3/95,7.

6. Substance produisant un gaz conforme à une ou plusieurs des revendications 1 à 5, caractérisée en ce que le mélange de gaz liquéfiés contient en plus du ou des combustibles et du protoxyde d'azote, un gaz inerte, en particulier un gaz inerte à faible pression partielle.

7. Substance produisant un gaz conforme à la revendication 6, caractérisée en ce que le gaz inerte est du dioxyde de carbone et/ou du xénon, présent en particulier à raison de 10 à 80 % en poids rapporté au mélange de combustible et de protoxyde d'azote.

8. Utilisation de la substance produisant un gaz conforme à une ou plusieurs des revendications 1 à 7 dans un générateur de gaz pour la production de gaz utile ou de gaz de pression par allumage d'une composition d'amorçage.

9. Utilisation de la substance produisant un gaz conforme à la revendication 8, caractérisée en ce que les gaz réactifs sont mis en contact avec des couches minces de métaux ou d'alliages de la mine du platine, formées par galvanisation.
